(19)

Europäisches
Patentamt
European
Patent Office
Office européen
des brevets

(11) **EP 3 495 873 A1**

(12) **EUROPEAN PATENT APPLICATION**
published in accordance with Art. 153(4) EPC

(43) Date of publication:
**12.06.2019 Bulletin 2019/24**

(21) Application number: **17863363.2**

(22) Date of filing: **01.09.2017**

(51) Int Cl.:
**G02C 7/04** (2006.01)    **A61F 9/013** (2006.01)

(86) International application number:
**PCT/JP2017/031616**

(87) International publication number:
**WO 2018/079072 (03.05.2018 Gazette 2018/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.10.2016  JP 2016212570**

(71) Applicant: **Toray Industries, Inc.
Tokyo 103-8666 (JP)**

(72) Inventors:
• **KATO, Kimiyasu
Otsu-shi
Shiga 520-8558 (JP)**
• **TANI, Yoshihiro
Otsu-shi
Shiga 520-8558 (JP)**

(74) Representative: **Prüfer & Partner mbB
Patentanwälte · Rechtsanwälte
Sohnckestraße 12
81479 München (DE)**

(54) **ORTHOKERATOLOGY LENS**

(57)     The present invention provides an orthokeratology lens for correcting vision by reshaping a cornea, said orthokeratology lens being characterized in that: the lens surface coming in contact with the cornea comprises a center part called a base region arranged at the center and pressing the cornea, an annular part called a reverse region arranged around the base region, an annular part called an alignment region arranged around the reverse region, and an annular part called a peripheral region arranged around the alignment region; and the depth of a lens required for reshaping a cornea is constant under the same radius of curvature of the alignment region by changing the radius of curvature of the reverse region even if changes occur in the radius of curvature and width of the base region, the width of the reverse region, the radius of curvature and width of the alignment region, the radius of curvature and width of the peripheral region, and a degree of vision a wearer desires to obtain by the correction.

Figure 5

**Description**

Technical Field

The present invention relates to an orthokeratology lens, and more specifically, the present invention relates to an orthokeratology contact lens which has a structure for changing the shape of the cornea surface.

Background Art

Orthokeratology is a known therapeutic means for correcting nearsightedness or myopia wherein a contact lens provided with a plurality of radii of curvature is worn overnight to reshape the cornea surface to thereby change focal distance of the cornea itself. Also known is the orthokeratology contact lens used in such therapy (for example, Patent Document 1).

The mechanism of correcting the eyesight using an orthokeratology contact lens is explained.

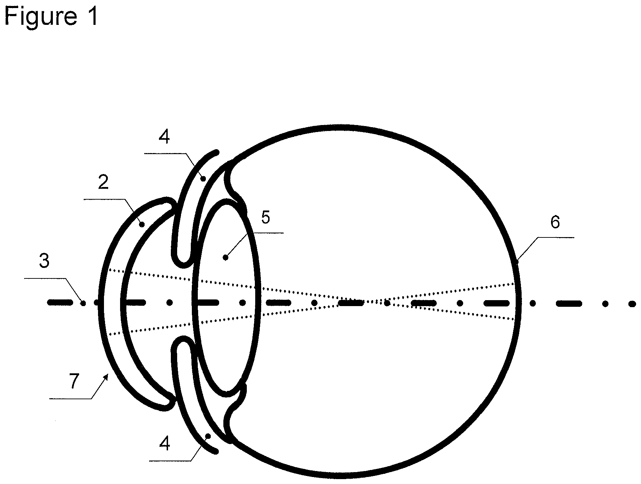

First, as shown in FIG. 1, in the case of myopia, the surface of the cornea 2 has a radius of curvature (the nonspherical shape on the left side of FIG. 1) which is higher than (convex in the front direction compared to) the retina. Accordingly, the focus will not be on the retina 6, and the light is converged before reaching the retina 6.

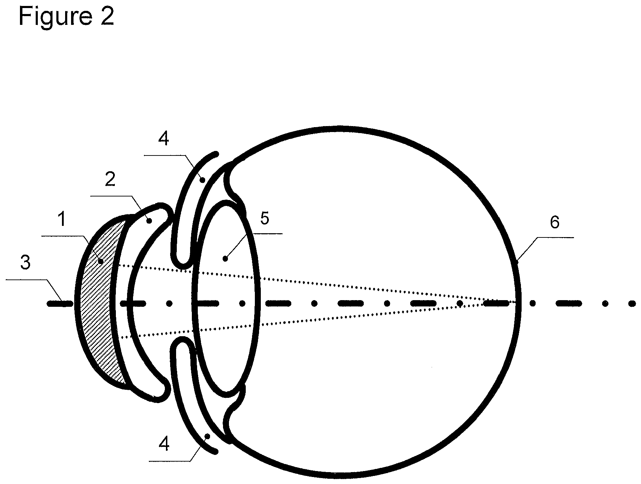

On such cornea 2, the orthokeratology contact lens 1 is fitted as shown in FIG. 2 like corset to reshape the cornea surface 7 of FIG. 1.

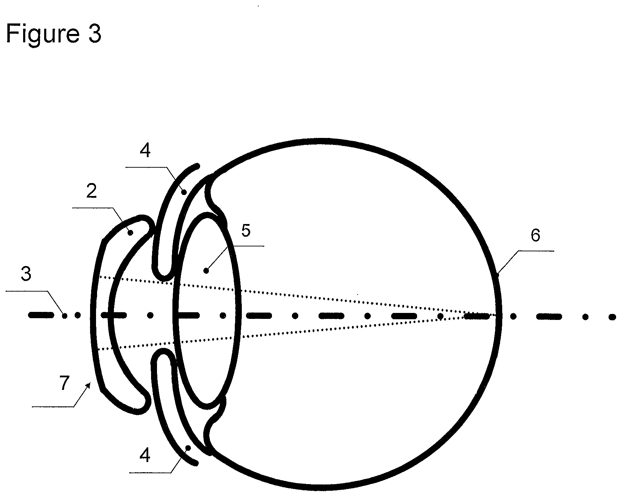

As a consequence of such correction, the flattened shape of the cornea surface 7 will be retained even after removing the orthokeratology contact lens 1 as shown in FIG. 3.

The light refraction is thereby adjusted and the focus will be on the retina 6, and this will result in the improved eyesight for a certain period.

Atypical orthokeratology contact lens is the one wherein the surface contacting the surface of the cornea has a shape divided into 4 parts, namely, a base region in the center of the orthokeratology contact lens which pushes the cornea surface (a concave spherical surface functioning as the part correcting the surface curve), an annular reverse region outside the periphery of the base region which receives the cornea tissue from the base region, an annular alignment region outside the periphery of the reverse region which fits the orthokeratology contact lens with the cornea and adjusts centering of the orthokeratology contact lens, and an annular peripheral region forming the edge which facilitates the lens removal and flowing of the lacrimal fluid into the interior of the orthokeratology contact lens.

Prior Art Documents

Patent Document

Patent Document 1: Japanese Patent No. 3881221

Summary of the Invention

Problems to Be Solved by the Invention

In the prior art orthokeratology contact lens described in Patent Document 1, the radius of curvature of the base region has been determined on the bases of the average radius of curvature of the cornea before the correction and the intended degree of correction.

In addition, the radius of curvature of the alignment region has been formed so that the value would be near the average radius of curvature of the cornea before the correction in view of the fitting with the cornea, and to satisfy the relation:

$$R_R = R_B + 11.00 \text{ D to } 15.00 \text{ D (D: diopter)}$$

when the radius of curvature of the base region was $R_B$ and the radius of curvature of the reverse region was $R_R$.

However, in the case of the shape derived from the conventional design idea based on such relation, the lens depth of the region related to the cornea correction will vary depending on the intended degree of correction since the shape is determined by the medical approach of ensuring the region receiving the cornea tissue from the base region.

As a consequence, in the case of the conventional means based on such relation, the lens depth of the region related to the cornea correction will be deep when intended degree of correction is small, and sufficient pushing of the central part of the cornea may not be accomplished since amount of pushing of the cornea in the axial direction of the eye may be insufficient or the cornea may not be contacted by the lens. In such case, the effect of correction may become inconsistent, and the intended degree of correction may not be achieved or an excessive time may be required to realize the desired correction of the eyesight.

On the other hand, when the depth of the cornea pushed in the axial direction of the eye is deep, there have been the risks of damaging the cornea, increasing probability of suffering from complication because of the reduced intraocular pressure, and roughening of the eye surface due to the forceful pushing of the cornea surface. In other words, the conventional method wherein the value of the radius of curvature of the reverse region is derived solely from the radius of curvature of the base region to be corrected suffered from the risks of inconsistent correction as well as damaging of the cornea.

In view of such situation, it has been found in the present invention that the radius of curvature of the reverse region is more preferably derived from the radius of curvature of the base region and the radius of curvature of the alignment region.

The present invention provides an orthokeratology contact lens wherein, even if the intended degree of correction is different, the lens depth of the region related to the cornea correction can be kept constant by changing radius of curvature of the reverse region as long as the radius of curvature of the alignment region is the same.

Means for Solving the Problems

In order to solve the problems as described above, the present invention has the constitution as described below.

(1) An orthokeratology contact lens for correcting eyesight by changing shape of the cornea wherein lens surface contacting the cornea comprises central area called base region at the center of the lens which pushes the cornea, an annular area called reverse region outside the periphery of the base region, an annular area called alignment region outside the periphery of the reverse region, and an annular area called peripheral region outside the periphery of the alignment region; and lens depth necessary for the correction of the cornea is kept constant by changing the radius of curvature of the reverse region even when radius of curvature and width of the base region, width of the reverse region, radius of curvature and width of the alignment region, and radius of curvature and width of the peripheral region, and intended degree of eyesight after the correction are changed.

(2) An orthokeratology contact lens according to (1) wherein the lens depth necessary for correcting the cornea is constant as long as the radius of curvature of the alignment region is the same.

(3) An orthokeratology contact lens according to (1) or (2) wherein the radius of curvature of the reverse region is derived from the radius of curvature and the width of the base region, the width of the reverse region, the radius of curvature and the width of the alignment region, and the radius of curvature and the width of the peripheral region.

(4) An orthokeratology contact lens according to (3) wherein, when the width of the base region is $W_B$, the width of the reverse region is $W_R$, the radius of curvature of the base region is $R_B$, the radius of curvature of the reverse region is $R_R$, the radius of curvature of the alignment region is $R_A$, the lens depth of the base region is $T_B$, the lens depth of the reverse region is $T_R$, and linear distance between point where the curve of the base region intersects the central axis of the contact lens and point where the extension of the curve of the alignment region intersects the central axis of the contact lens is $S_P$, the lens depth $T_R$ of the reverse region is derived from the following equation (1):
[Mathematical formula 1]

$$T_R = R_A - \sqrt{R_A{}^2 - F^2} - R_B + \sqrt{R_B{}^2 - E^2} - S_P$$

$$\cdots (1)$$

(in equation (1), E represents $W_B/2$ and F represents $W_B/2+W_R$), and
the radius of curvature $R_R$ of the reverse region is derived by using $T_R$ from the following equation (2):
[Mathematical formula 2]

$$R_R = \sqrt{\left(\frac{F^2 - E^2 - T_R{}^2}{2 \cdot T_R}\right)^2 + F^2} \qquad \cdots (2)$$

(in equation (2), E represents $W_B/2$ and F represents $W_B/2+W_R$).

(5) An orthokeratology contact lens according to (4) wherein the lens depth $T_R$ and the radius of curvature $R_R$ are respectively within $\pm10\%$ of the derived lens depth $T_R$ and radius of curvature $R_R$.

(6) An orthokeratology contact lens according to (1) wherein the radius of curvature and the width of the alignment region are different in longitudinal direction and transverse direction when seen in the direction of the central axis of the contact lens.

(7) An orthokeratology contact lens according to claim 6 wherein the lens depth necessary for the correction of the cornea is constant as long as the maximum radius of curvature of the alignment region is the same.

(8) An orthokeratology contact lens according to (6) or (7) wherein the radius of curvature of the reverse region is derived from the radius of curvature and the width of the base region, the width of the reverse region, the maximum radius of curvature and the maximum width of the alignment region, and the radius of curvature and width of the peripheral region.

(9) An orthokeratology contact lens according to any one of (6) to (8) wherein, when the width of the base region is $W_B$, the width of the reverse region is $W_R$, the radius of curvature of the base region is $R_B$, the radius of curvature of the reverse region is $R_R$, the maximum radius of curvature of the alignment region is $R_{AV}$, the lens depth of the base region is $T_B$, the lens depth of the reverse region is $T_R$, and linear distance between point where the curve of the base region intersects the central axis of the contact lens and point where the extension of the curve with maximum radius of curvature of the alignment region intersects the central axis of the contact lens is $S_P$ the lens depth $T_R$ of the reverse region is derived from the following equation (3):

[Mathematical formula 3]

$$T_R = R_{AV} - \sqrt{R_{AV}{}^2 - F^2} - R_B + \sqrt{R_B{}^2 - E^2} - S_{PT}$$

$$\cdots(3)$$

(in equation (3), E represents $W_B/2$ and F represents $W_B/2+W_R$), and the radius of curvature $R_R$ of the reverse region is derived by using $T_R$ from the following equation (2):

[Mathematical formula 4]

$$R_R = \sqrt{\left(\frac{F^2 - E^2 - T_R{}^2}{2\cdot T_R}\right)^2 + F^2} \qquad \cdots(2)$$

(in equation (2), E represents $W_B/2$ and F represents $W_B/2+W_R$). (10) An orthokeratology contact lens according to (9) wherein the lens depth $T_R$ and the radius of curvature $R_R$ are respectively within $\pm10\%$ of the derived lens depth $T_R$ and radius of curvature $R_R$.

Advantageous Effects of the Invention

The present invention provides an orthokeratology contact lens wherein the lens depth of the region related to the cornea correction can be kept constant by changing radius of curvature of the reverse region even if the intended degree of correction is different as long as the radius of curvature of the alignment region is the same.

Brief Description of the Drawings

[FIG. 1] A schematic view showing an eyeball wherein the cornea is in myopia state.
[FIG. 2] A schematic view showing an eyeball wearing an orthokeratology contact lens.
[FIG. 3] A schematic view showing an eyeball after removing the orthokeratology contact lens.
[FIG. 4] A schematic view showing the orthokeratology contact lens of the present invention.
[FIG. 5] A schematic view for explaining the shape of the orthokeratology contact lens of the present invention.
[FIG. 6] A schematic view showing the toric orthokeratology contact lens of the present invention.
[FIG. 7] A schematic view for explaining the shape of the toric orthokeratology contact lens of the present invention.

Description of Preferred Embodiments

The present invention relates to an orthokeratology contact lens for correcting eyesight by changing shape of the cornea wherein lens surface contacting the cornea comprises central area called base region at the center of the lens which pushes the cornea, an annular area called reverse region outside the periphery of the base region, an annular area called alignment region outside the periphery of the reverse area, and an annular area called peripheral region outside the periphery of the alignment area, and the lens depth necessary for the correction of the cornea is kept constant by changing the radius of curvature of the reverse region even when the radius of curvature and the width of the base region, the width of the reverse region, the radius of curvature and the width of the alignment region, and the radius of curvature and the width of the peripheral region, and intended degree of eyesight after the correction are changed. More specifically, the present invention relates to an orthokeratology contact lens wherein the lens depth necessary for the correction of the cornea is constant as long as the radius of curvature of the alignment region is the same.

Next, a preferred embodiment of the present invention is described.

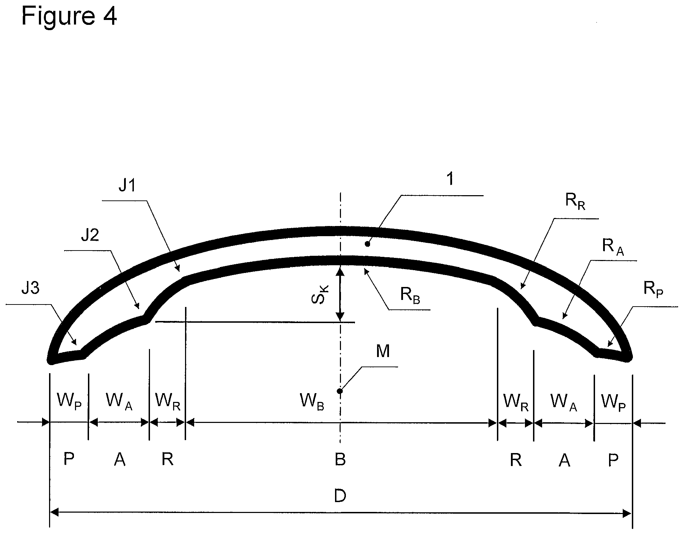

First, the orthokeratology contact lens of the present invention is preferably a hard contact lens having a high oxygen permeation, and as shown in FIG. 4, the surface of the orthokeratology contact lens of the present invention which contact cornea 2 of FIG. 1 is divided into 4 parts.

The 4 parts are:

the central spherical area called base region B which is in contact with the cornea 2 of FIG. 1 and which pushes the surface 7 of the cornea to accomplish the function of correcting the radius of curvature of the cornea surface,
an annular area called reverse region R outside the periphery of the base region B which receives cornea tissue from the base region B,
an annular area called alignment region A outside the periphery of the reverse area R which adjusts fitting between the orthokeratology contact lens 1 and the cornea 2 and centering of the orthokeratology contact lens 1, and
an edge-forming area called peripheral region P which facilitates removal of the lens and inflow of the lacrimal fluid into the interior of the orthokeratology contact lens 1.

In the cross-sectional shape including the central axis M of the contact lens, the central point $C_B$ of the radius of curvature $R_B$ of the base region B is located on the central axis M of the contact lens, and the radius of curvature is determined so that the cornea surface 7 will reach the intended degree of correction. The myopia can be corrected since the shape of the cornea surface 7 will be reshaped depending on the radius of curvature.

In the reverse region R, a space is formed between the orthokeratology contact lens 1 and the cornea 2, and this space functions as a space receiving the cornea tissue resulting from the correction in the base region B.

The alignment region A contributes for precise centering of the orthokeratology contact lens 1 by the contact with the cornea 2 or by the state resembling such contact but at a distance of several microns. With regard to the radius of curvature $R_A$ of the alignment region A, the central point $C_A$ is preferably located on the central axis M of the contact lens, and the value is preferably near the radius of curvature of the cornea surface before the correction in order to improve the fitting to the cornea 2.

The peripheral region P preferably has a rounded conical cross-sectional shape to facilitate flowing of the lacrimal fluid from the edge of the orthokeratology contact lens 1 to the cornea 2 and to reduce the unconformable feeling during the wearing.

As shown in FIG. 4, all curved surfaces have a radius of curvature surrounding the central axis M of the contact lens, and have a shape resembling a bowl with the recessed side facing the cornea 2 as shown in FIG. 1.

Furthermore, transition point J1 between the base region and the reverse region, transition point J2 between the reverse region and the alignment region, and transition point J3 between the alignment region and the peripheral region which are continuous with each other are preferably rounded so that the cornea 2 is not injured by these transition points upon wearing of the lens, and their radius of curvature is preferably 0.02 to 4.00 mm.

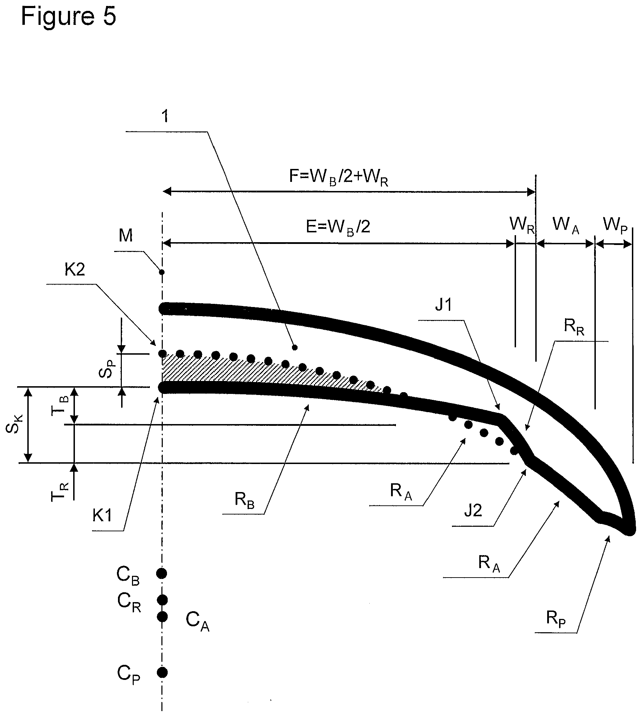

An embodiment of the present invention is described in detail by referring to FIG. 5, which is a schematic view of the orthokeratology contact lens 1 of the present invention.

In FIG. 5, the width of the base region is $W_B$, the width of the reverse region is $W_R$, the width of the alignment region is $W_A$, the width of the peripheral region is $W_P$, the radius of curvature of the base region is $R_B$, the radius of curvature of the reverse region is $R_R$, the radius of curvature of the alignment region is $R_A$, the radius of curvature of the peripheral region is $R_P$, the lens depth of the base region is $T_B$, the lens depth of the reverse region is $T_R$, the lens depth related to the correction of the cornea is $S_K$ ($=T_B+T_R$), and the linear distance between point K1 where the curve of the base region intersects the central axis of the contact lens and point K2 where the extension of the curve of the alignment region intersects the central axis M of the contact lens is $S_P$.

Since the radius of curvature of the base region $R_B$ is determined to realize the correction to the intended degree of eyesight, the lens depth $T_B$ of the base region is calculated from the width $W_B$ of the base region by the following formula (4):
[Mathematical formula 5]

$$T_B = R_B - \sqrt{R_B{}^2 - \frac{W_B{}^2}{4}} \qquad \cdots (4)$$

The value of the radius of curvature $R_A$ of the alignment region is preferably near the value of average radius of curvature $R_K$ of the cornea before the correction in order to improve fitting with the cornea 2.

A characteristic feature of the present invention is that, in the cross-section including the central axis M of the orthokeratology contact lens, the lens depth necessary for the correction of the cornea is kept constant by changing the radius of curvature $R_R$ of the reverse region even if the $R_B$, $W_B$, $W_R$, $R_A$, $W_A$, $R_P$, $W_P$, and the intended degree of correction are changed, and that the lens depth $S_K$ related to the correction of the cornea is kept constant as long as the radius of curvature $R_A$ of the alignment region is the same.

More specifically, in the cross-section including the central axis M of the orthokeratology contact lens of the present invention, the lens depth $S_K$ related to the correction of the cornea can be kept constant by calculating the lens depth of the reverse region $T_R$ by identifying the value of the lens depth $S_K$ related to the correction of the cornea and then determining the radius of curvature $R_R$ of the reverse region so that the value of the lens depth of the reverse region $T_R$ is satisfied.

In other words, in the cross-section including the central axis M of the orthokeratology contact lens of the present invention, the lens depth of the reverse region $T_R$ is determined by $T_R = S_K - T_B$ from the $R_B$, $W_B$, $S_K$, and $T_B$ as described above. As a consequence, the transition point J1 between the base region and the reverse region and the transition point J2 between the reverse region and the alignment region can be determined from the $T_B$, $R_B$, $W_B$, $T_R$, $W_R$, $R_A$, $W_A$, $R_P$, and $W_P$.

With regard to the curve of the reverse region R, the lens depth $S_K$ related to the correction of the cornea can be retained at a constant value even if the intended degree of the correction is changed as long as the curve of the reverse region R passes the transition point J1 between the base region and the reverse region and the transition point J2 between the reverse region and the alignment region while retaining the same radius of curvature $R_A$ of the alignment region.

With regard to the radius of curvature $R_R$ of the reverse region, its central point $C_R$ is preferably located on the central axis M of the contact lens in view of the adequate space formed for receiving the cornea tissue moved in the eyesight correction.

Furthermore, the lens depth $S_K$ relating to the correction of the cornea may be kept constant by calculating the lens depth of the reverse region $T_R$ from the linear distance $S_P$ between point K1 where the curve of the base region intersects the central axis M of the contact lens and point K2 where the extension of the curve of the alignment region intersects the central axis M of the contact lens, and determining the radius of curvature $R_R$ of the reverse region to satisfy such value.

In the cross-section including the central axis M of the orthokeratology contact lens, when $R_B$, $W_B$, $W_R$, $R_A$, $W_A$, $R_P$, $W_P$, $T_B$, and $T_R$ are as described above, the linear distance between the K1 and K2 is $S_P$, and $E = W_B/2$ and $F = W_B/2 + W_R$ for simplification of the equation, the lens depth of the reverse region $T_R$ is calculated by the following equation (1):
[Mathematical formula 6]

$$T_R = R_A - \sqrt{R_A{}^2 - F^2} - R_B + \sqrt{R_B{}^2 - E^2} - S_P$$

$$\cdots (1)$$

The central point $C_R$ of the radius of curvature $R_R$ of the reverse region calculated by this lens depth of the reverse region $T_R$ is located on the central axis M of the contact lens, and the $R_R$ satisfied the following equation (2):
[Mathematical formula 7]

$$R_R = \sqrt{\left(\frac{F^2 - E^2 - T_R{}^2}{2 \cdot T_R}\right)^2 + F^2} \qquad \cdots (2)$$

The surface then passes the transition point J1 between the base region and the reverse region and the transition point J2 between the reverse region and the alignment region and the lens depth $S_K$ of the region related to the correction of the cornea is kept constant, and this is the orthokeratology contact lens of the present invention.

Furthermore, in the present invention, when it is assumed that the average radius of curvature $R_K$ of the cornea is the same curved surface as the radius of curvature $R_A$ of the alignment region, the linear distance $S_P$ between the point K1 where the curve of the base region intersects the central axis M of the contact lens and the point K2 where the extension of the curve of the radius of curvature of the alignment region intersects the central axis M of the contact lens can be regarded as the design value of the pushing of the cornea in the axial direction of the eye.

Accordingly, the orthokeratology contact lens of the present invention shares common feature with the design idea based on the values determined by assuming an adequate amount of pushing of the cornea corresponding to the intended degree of correction. However, the present invention has enabled determination of the shape capable of sufficiently pushing the central part of the cornea compared to the conventional orthokeratology contact lens.

It is to be noted that the curved surface does not necessarily correspond to the equations (1), (2), and (4), and practically acceptable effects are achieved as long as the curved surface passes the points within ±10% of the values of equations (1), (2), and (4).

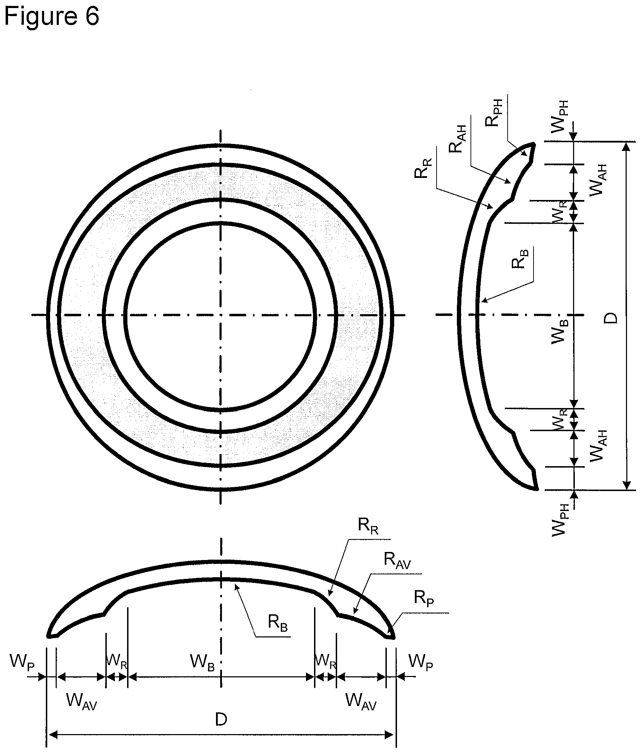

Another type of the orthokeratology contact lens is toric orthokeratology contact lens. As shown in FIG. 6, in the case of the toric orthokeratology contact lens, the radius of curvature $R_A$ and the width $W_A$ of the alignment region are different in the longitudinal direction and the transverse direction when the orthokeratology contact lens is seen from the direction of the central axis.

The toric orthokeratology contact lens is formed to satisfy the relation: $R_{AV} = R_{AH} + 0.50D$ to $6.00D$ (D: diopter) when the radius of curvature in the transverse direction of FIG. 6 where the value of the radius of curvature of the alignment region is in its maximum is $R_{AV}$ and the radius of curvature in the transverse direction of FIG. 6 where the value of the radius of curvature of the alignment region is in its minimum is $R_{AH}$.

The width $W_{AV}$ of the radius of curvature $R_{AV}$ of the alignment region is calculated to satisfy the relation:

$$W_{AV} = (\text{contact lens diameter D} - (W_B + 2 \cdot W_R + 2 \cdot W_P))/2$$

and the shape of the alignment region will be an oblong shape with the aspect ratio in excess of 0.90 and less than 1.00 when the orthokeratology contact lens is seen from the direction of the central axis.

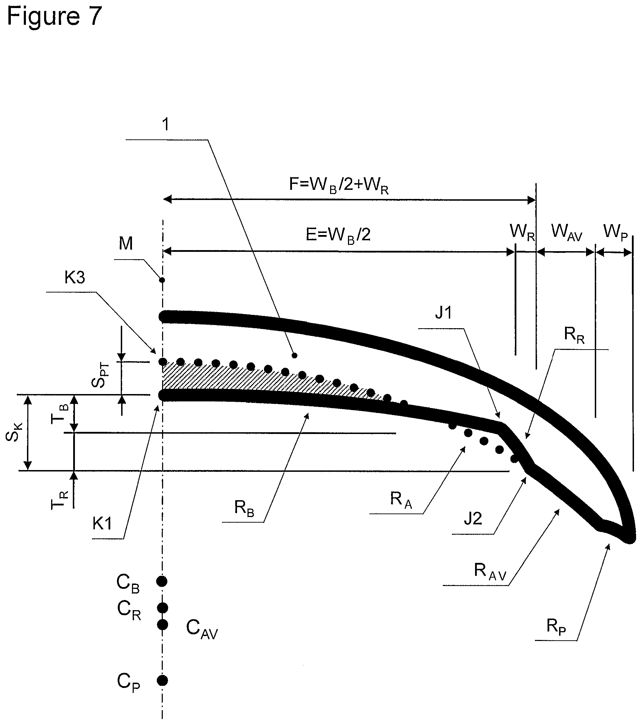

Next, an embodiment of the toric orthokeratology contact lens of the present invention is described in detail by referring to FIG. 7.

FIG. 7 is a schematic view of the toric orthokeratology contact lens 1 of the present invention, which is a cross-section along the central axis M of the orthokeratology contact lens in the transverse direction of FIG. 6 where the value of the radius of curvature of the alignment region is in its maximum.

In FIG. 7, the width of the base region is $W_B$, the width of the reverse region is $W_R$, the width of the alignment region is $W_{AV}$, the width of the peripheral region is $W_P$, the radius of curvature of the base region is $R_B$, the radius of curvature of the reverse region is $R_R$, the radius of curvature of the alignment region where it reaches the maximum is $R_{AV}$, the radius of curvature of the peripheral region is $R_P$, the lens depth of the base region is $T_B$, the lens depth of the reverse region is $T_R$, the lens depth related to the correction of the cornea is $S_K$ (= $T_B + T_R$), and the linear distance between point K1 where the curve of the base region intersects the central axis of the contact lens and point K3 where the extension of the curve of the radius of curvature of the alignment region where it reaches the maximum intersects the central axis M of the contact lens is $S_{PT}$.

Since the radius of curvature $R_B$ of the base region is determined to realize the intended degree of correction, the lens depth of the base region $T_B$ is calculated by the width of the base region $W_B$ from the following equation (4):
[Mathematical formula 8]

$$T_B = R_B - \sqrt{R_B{}^2 - \frac{W_B{}^2}{4}} \qquad \cdots (4)$$

The radius of curvature $R_{AV}$ of the alignment region where it reaches the maximum is preferably at a value near the maximum radius of curvature $R_{KT}$ of the cornea before the correction in view of improving the fitting to the cornea 2.

The characteristic feature of the present invention is that, the lens depth related to correcting the cornea can be kept constant by changing the radius of curvature $R_R$ of the reverse region even if the $R_B$, $W_B$, $W_R$, $R_{AV}$, $W_{AV}$, $R_{AH}$, $W_{AH}$, $R_P$, $W_P$, or the intended degree of correction were changed in the cross-section of the orthokeratology contact lens which includes the central axis M and where the radius of curvature of the alignment region reaches its maximum, and that the lens depth $S_K$ related to the correction of the cornea is constant as long as the maximum radius of curvature $R_{AV}$ of the alignment region is the same.

More specifically, in the cross-section of the orthokeratology contact lens of the present invention which includes the central axis M and where the radius of curvature of the alignment region reaches its maximum, the lens depth $S_K$ necessary for correcting the cornea can be kept constant by calculating the lens depth of the reverse region $T_R$ by identifying the value of the lens depth $S_K$ related to the correction of the cornea and then determining the radius of curvature $R_R$ of the reverse region so that the value of the lens depth of the reverse region $T_R$ is satisfied.

With regard to the radius of curvature $R_R$ of the reverse region, its central point $C_R$ is preferably located on the central axis M of the contact lens in view of the adequate space formed for receiving the cornea tissue moved in the eyesight correction.

Furthermore, the lens depth $S_K$ related to the correction of the cornea may be kept constant by calculating the lens depth of the reverse region $T_R$ from the linear distance $S_{PT}$ between the point K1 where the curve of the base region intersects the central axis M of the contact lens and the point K3 where the extension of the curve of the radius of curvature of the alignment region where it reaches the maximum intersects the central axis M of the contact lens, and determining the radius of curvature $R_R$ of the reverse region to satisfy the value $T_R$.

In the cross-section of the orthokeratology contact lens which includes the central axis M and where the radius of curvature of the alignment region reaches its maximum, when the $R_B$, $W_B$, $W_R$, $R_{AV}$, $W_{AV}$, $R_P$, $W_P$, $T_B$, and $T_R$ are as described above, the linear distance between K1 and K3 is $S_{PT}$, and $E = W_B/2$ and $F = W_B/2+W_R$ for simplification of the equation, the lens depth of the reverse region $T_R$ is calculated by the following equation (3):

[Mathematical formula 9]

$$T_R = R_{AV} - \sqrt{R_{AV}{}^2 - F^2} - R_B + \sqrt{R_B{}^2 - E^2} - S_{PT}$$

$$\cdots (3)$$

The central point $C_R$ of the radius of curvature $R_R$ of the reverse region calculated by this lens depth of the reverse region $T_R$ is located on the central axis M of the contact lens, and the $R_R$ satisfied the following equation (2):

[Mathematical formula 10]

$$R_R = \sqrt{\left(\frac{F^2 - E^2 - T_R{}^2}{2 \cdot T_R}\right)^2 + F^2} \qquad \cdots (2)$$

The surface then passes the transition point J1 between the base region and the reverse region and the transition point J2 between the reverse region and the alignment region and the lens depth $S_K$ of the region related to the correction of the cornea is kept constant, and this is the toric orthokeratology contact lens of the present invention.

Furthermore, in the present invention, when it is assumed that the maximum radius of curvature $R_{KT}$ of the cornea is the same as the maximum radius of curvature $R_{AV}$ of the alignment region, the linear distance $S_{PT}$ between the point K1 where the curve of the base region intersects the central axis M of the contact lens and the point K3 where the extension of the curve of the radius of curvature of the alignment region where it reaches the maximum intersects the central axis M of the contact lens can be regarded as the design value of pushing of the cornea in the axial direction of the eye.

Accordingly, the toric orthokeratology contact lens of the present invention shares common feature with the design idea based on the values determined by assuming an adequate amount of pushing of the cornea corresponding to the intended degree of correction. However, the present invention has enabled the shape capable of sufficiently pushing the central part of the cornea compared to the conventional orthokeratology contact lens.

It is to be noted that the curved surface does not necessarily correspond to the equations (2) to (4), and practically acceptable effects are achieved as long as the curved surface passes the points within ±10% of the central values of equations (2) to (4).

Examples

Next, the present invention is described in detail by referring to Examples. It is to be noted that the values of the radius of curvature and the height in the Examples were measured by contact-type contour measuring machine (manufactured by Mitutoyo Corporation).

[Example 1]

With regard to sample A, an orthokeratology contact lens was prepared by assuming an eye with the refractive power of the cornea of 42.00 diopter, the radius of curvature of the cornea of 8.04 mm, and the ametropia of -2.50. Since the target degree of correction was +0.75 diopter, the radius of curvature $R_B$ of the base region of the orthokeratology contact lens was 8.71 mm. The diameter D of the orthokeratology contact lens was 10.6 mm, the width of the base region $W_B$ was 6.20 mm, the width of the reverse region $W_R$ was 0.40 mm, the radius of curvature $R_A$ of the alignment region was 8.04 mm, and the linear distance $S_P$ between the point where the curve of the base region intersects the central axis of the contact lens and the point where the extension of the curve of the alignment region intersects the central axis of the contact lens was 0.03 mm, and the lens depth $T_R$ of the reverse region was calculated by the following equation (1) wherein $E = W_B/2$ and $F = W_B/2 + W_R$ were used for simplification of the equation.
[Mathematical formula 11]

$$T_R = R_A - \sqrt{R_A{}^2 - F^2} - R_B + \sqrt{R_B{}^2 - E^2} - S_P$$

$$\cdots (1)$$

By using the lens depth $T_R$ of the reverse region, the radius of curvature $R_R$ of the reverse region was calculated by the following equation (2):
[Mathematical formula 12]

$$R_R = \sqrt{\left(\frac{F^2 - E^2 - T_R{}^2}{2 \cdot T_R}\right)^2 + F^2} \qquad \cdots (2)$$

For the orthokeratology contact lens of sample A, the lens depth $T_R$ of the reverse region and the radius of curvature $R_R$ of the reverse region were respectively 0.20 mm and 7.34 mm, and the lens depth $S_K$ related to the cornea correction was 0.77 mm.

[Example 2]

With regard to sample B, an orthokeratology contact lens was prepared by assuming an eye with the refractive power of the cornea of 42.00 diopter, the radius of curvature of the cornea of 8.04 mm, and the ametropia of -5.00. Since the target degree of correction was +0.75 diopter as in the case of sample C, the radius of curvature $R_B$ of the base region of the orthokeratology contact lens was 9.31 mm. The diameter D of the orthokeratology contact lens was 10.6 mm, the width of the base region $W_B$ was 6.20 mm, the width of the reverse region $W_R$ was 0.40 mm, the radius of curvature $R_A$ of the alignment region was 8.04 mm, and the linear distance Sp between the point where the curve of the base region intersects the central axis of the contact lens and the point where the extension of the curve of the alignment region intersects the central axis of the contact lens was 0.03 mm, and the lens depth $T_R$ of the reverse region was calculated by the following equation (1) wherein $E = W_B/2$ and $F = W_B/2 + W_R$ were used for simplification of the equation.
[Mathematical formula 13]

$$T_R = R_A - \sqrt{R_A{}^2 - F^2} - R_B + \sqrt{R_B{}^2 - E^2} - S_P$$

$$\cdots (1)$$

By using the lens depth $T_R$ of the reverse region, the radius of curvature $R_R$ of the reverse region was calculated by the following equation (2):
[Mathematical formula 14]

$$R_R = \sqrt{\left(\frac{F^2 - E^2 - T_R{}^2}{2 \cdot T_R}\right)^2 + F^2} \qquad \cdots (2)$$

For the orthokeratology contact lens of sample B, the lens depth $T_R$ of the reverse region and the radius of curvature $R_R$ of the reverse region were respectively 0.24 mm and 6.41 mm, and the lens depth $S_K$ related to the cornea correction was 0.77 mm.

[Example 3]

With regard to sample C, a toric orthokeratology contact lens was prepared by assuming an eye with the refractive power of the cornea of 42.00 diopter, the radius of curvature in transverse direction of the cornea of 8.04 mm, the radius of curvature in longitudinal direction of the cornea of 7.76 mm, and the ametropia of -2.50. Since the target degree of correction was +0.75 diopter, the radius of curvature $R_B$ of the base region of the orthokeratology contact lens was 8.71 mm. The diameter D of the orthokeratology contact lens was 10.6 mm, the width of the base region $W_B$ was 6.20 mm, and the width of the reverse region $W_R$ was 0.40 mm. The radius of curvature $R_{AV}$ of the alignment region where the value of the radius of curvature of was maximum was 8.04 mm, and the linear distance $S_{PT}$ between the point where the curve of the base region intersects the central axis of the contact lens and the point where the extension of the curve of the alignment region intersects the central axis of the contact lens was 0.03 mm, and the lens depth $T_R$ of the reverse region was calculated by the following equation (3) wherein E = $W_B/2$ and F= $W_B/2+W_R$ were used for simplification of the equation.
[Mathematical formula 15]

$$T_R = R_{AV} - \sqrt{R_{AV}{}^2 - F^2} - R_B + \sqrt{R_B{}^2 - E^2} - S_{PT}$$

$$\cdots (3)$$

By using the lens depth $T_R$ of the reverse region, the radius of curvature $R_R$ of the reverse region was calculated by the following equation (2):
[Mathematical formula 16]

$$R_R = \sqrt{\left(\frac{F^2 - E^2 - T_R{}^2}{2 \cdot T_R}\right)^2 + F^2} \qquad \cdots (2)$$

For the orthokeratology contact lens of sample C, the lens depth $T_R$ of the reverse region and the radius of curvature $R_R$ of the reverse region were respectively 0.20 mm and 7.34 mm, and the lens depth $S_K$ related to the cornea correction was 0.77 mm.

[Example 4]

With regard to sample D, a toric orthokeratology contact lens was prepared by assuming an eye with the refractive power of the cornea of 42.00 diopter, the radius of curvature in transverse direction of the cornea of 8.04 mm, the radius of curvature in longitudinal direction of the cornea of 7.76 mm, and the ametropia of -5.00. Since the target degree of correction was +0.75 diopter as in the case of sample C, the radius of curvature $R_B$ of the base region of the orthokeratology contact lens was 9.31 mm. The diameter D of the orthokeratology contact lens was 10.6 mm, the width of the base region $W_B$ was 6.20 mm, and the width of the reverse region $W_R$ was 0.40 mm. The radius of curvature $R_{AV}$ of the alignment region where the value of the radius of curvature of was maximum was 8.04 mm, and the linear distance $S_{PT}$ between the point where the curve of the base region intersects the central axis of the contact lens and the point where the extension of the curve of the alignment region intersects the central axis of the contact lens was 0.03 mm, and the lens depth $T_R$ of the reverse region was calculated by the following equation (3) wherein E = $W_B/2$ and F= $W_B/2+W_R$ were used for simplification of the equation.
[Mathematical formula 17]

$$T_R = R_{AV} - \sqrt{R_{AV}^2 - F^2} - R_B + \sqrt{R_B^2 - E^2} - S_{PT}$$

$$\cdots (3)$$

By using the lens depth $T_R$ of the reverse region, the radius of curvature $R_R$ of the reverse region was calculated by the following equation (2):
[Mathematical formula 18]

$$R_R = \sqrt{\left(\frac{F^2 - E^2 - T_R^2}{2 \cdot T_R}\right)^2 + F^2} \qquad \cdots (2)$$

For the orthokeratology contact lens of sample D, the lens depth $T_R$ of the reverse region and the radius of curvature $R_R$ of the reverse region were respectively 0.24 mm and 6.41 mm, and the lens depth $S_K$ related to the cornea correction was 0.77 mm.

As described above, the present invention provides an orthokeratology contact lens wherein the lens depth of the region related to the cornea correction can be kept constant by changing radius of curvature of the reverse region even if the intended degree of correction is different as long as the radius of curvature of the alignment region is the same or as long as the radius of curvature of the alignment region where it reaches the maximum is the same in the case of the toric orthokeratology contact lens.

Industrial Applicability

The present invention is adapted for use as an orthokeratology contact lens.

Explanation of Numerals

1: orthokeratology contact lens
2: cornea
3: axis of eye
4: iris
5: crystalline lens
6: retina
7: surface of cornea
D: diameter of the orthokeratology contact lens
B: base region
R: reverse region
A: alignment region
P: peripheral region
J1: transition point where the base region encounters the reverse region
J2: transition point where the reverse region encounters the alignment region
J3: transition point where the alignment region encounters the peripheral region
K1: point where the curve of the base region intersects the central axis of the contact lens
K2: point where the extension of the curve of the alignment region intersects the central axis of the contact lens
K3: point where the extension of the curve with the maximum radius of curvature of the alignment region intersects the central axis M of the contact lens
M: central axis of the contact lens
$C_B$: central point of the radius of curvature of the base region
$C_R$: central point of the radius of curvature of the reverse region
$C_A$: central point of the radius of curvature of the alignment region
$C_{AV}$: central point of the maximum radius of curvature of the alignment region
$C_P$: central point of the radius of curvature of the peripheral region

$R_K$: average radius of curvature of the cornea

$R_{KT}$: maximum radius of curvature of the cornea

$R_B$: radius of curvature of the base region

$R_R$: radius of curvature of the reverse region

$R_A$: radius of curvature of the alignment region

$R_{AH}$: minimum radius of curvature of the alignment region in the toric orthokeratology contact lens

$R_{AV}$: maximum radius of curvature of the alignment region in the toric orthokeratology contact lens

$R_P$: radius of curvature of the peripheral region

$R_{PH}$: radius of curvature of the peripheral region in the direction of the minimum radius of curvature of the alignment region in the toric orthokeratology contact lens

$T_B$: lens depth of the base region

$T_R$: lens depth of the reverse region

$S_K$: lens depth of the region related to cornea correction

$S_P$: linear distance between the point where the curve of the base region intersects central axis of the contact lens and the point where the extension of the curve of the alignment region intersects the central axis of the contact lens

$S_{PT}$: linear distance between the point where the curve of the base region intersects the central axis of the contact lens and the point where the extension of the curve with the maximum radius of curvature of the alignment region intersects the central axis of the contact lens

$W_B$: width of the base region

$W_R$: width of the reverse region

$W_A$: width of the alignment region

$W_{AH}$: width in the direction of the minimum radius of curvature of the alignment region in the toric orthokeratology contact lens

$W_{AV}$: width in the direction of the maximum radius of curvature of the alignment region in the toric orthokeratology contact lens

$W_P$: width of the peripheral region

$W_{PH}$: width of the peripheral region in the direction of the minimum radius of curvature of the alignment region in the toric orthokeratology contact lens

**Claims**

1. An orthokeratology contact lens for correcting eyesight by changing shape of the cornea wherein lens surface contacting the cornea comprises

   central area called base region at the center of the lens which pushes the cornea,
   an annular area called reverse region outside the periphery of the base region,
   an annular area called alignment region outside the periphery of the reverse region, and
   an annular area called peripheral region outside the periphery of the alignment region, and

   lens depth necessary for the correction of the cornea is kept constant by changing the radius of curvature of the reverse region even when radius of curvature and width of the base region, width of the reverse region, radius of curvature and width of the alignment region, and radius of curvature and width of the peripheral region, and intended degree of eyesight after the correction are changed.

2. An orthokeratology contact lens according to claim 1 wherein the lens depth necessary for correcting the cornea is constant as long as the radius of curvature of the alignment region is the same.

3. An orthokeratology contact lens according to claim 1 or 2 wherein the radius of curvature of the reverse region is derived from the radius of curvature and the width of the base region, the width of the reverse region, the radius of curvature and the width of the alignment region, and the radius of curvature and the width of the peripheral region.

4. An orthokeratology contact lens according to any one of claims 1 to 3 wherein, when the width of the base region is $W_B$, the width of the reverse region is $W_R$, the radius of curvature of the base region is $R_B$, the radius of curvature of the reverse region is $R_R$, the radius of curvature of the alignment region is $R_A$, lens depth of the base region is $T_B$, lens depth of the reverse region is $T_R$, and linear distance between point where the curve of the base region intersects the central axis of the contact lens and point where the extension of the curve of the alignment region intersects the central axis of the contact lens is $S_P$,

the lens depth $T_R$ of the reverse region is derived from the following equation (1):
[Mathematical formula 1]

$$T_R = R_A - \sqrt{R_A{}^2 - F^2} - R_B + \sqrt{R_B{}^2 - E^2} - S_P$$

$$\cdots (1)$$

(in equation (1), E represents $W_B/2$ and F represents $W_B/2+W_R$), and
the radius of curvature $R_R$ of the reverse region is derived by using $T_R$ from the following equation (2):
[Mathematical formula 2]

$$R_R = \sqrt{\left(\frac{F^2 - E^2 - T_R{}^2}{2 \cdot T_R}\right)^2 + F^2} \qquad \cdots (2)$$

(in equation (2), E represents $W_B/2$ and F represents $W_B/2+W_R$).

5. An orthokeratology contact lens according to claim 4 wherein the lens depth $T_R$ and the radius of curvature $R_R$ are respectively within $\pm 10\%$ of the derived lens depth $T_R$ and radius of curvature $R_R$.

6. An orthokeratology contact lens according to claim 1 wherein the radius of curvature and the width of the alignment region are different in longitudinal direction and transverse direction when seen in the direction of the central axis of the contact lens.

7. An orthokeratology contact lens according to claim 6 wherein the lens depth necessary for the correction of the cornea is constant as long as the maximum radius of curvature of the alignment region is the same.

8. An orthokeratology contact lens according to claim 6 or 7 wherein the radius of curvature of the reverse region is derived from the radius of curvature and the width of the base region, the width of the reverse region, the maximum radius of curvature and the maximum width of the alignment region, and the radius of curvature and width of the peripheral region.

9. An orthokeratology contact lens according to any one of claims 6 to 8 wherein, when the width of the base region is $W_B$, the width of the reverse region is $W_R$, the radius of curvature of the base region is Rs, the radius of curvature of the reverse region is $R_R$, the maximum radius of curvature of the alignment region is $R_{AV}$, the lens depth of the base region is the $T_B$, the lens depth of the reverse region is the $T_R$, and linear distance between point where the curve of the base region intersects the central axis of the contact lens and point where the extension of the curve with maximum radius of curvature of the alignment region intersects the central axis of the contact lens is $S_P$, the lens depth $T_R$ of the reverse region is derived from the following equation (3):
[Mathematical formula 3]

$$T_R = R_{AV} - \sqrt{R_{AV}{}^2 - F^2} - R_B + \sqrt{R_B{}^2 - E^2} - S_{PT}$$

$$\cdots (3)$$

(in equation (3), E represents $W_B/2$ and F represents $W_B/2+W_R$), and
the radius of curvature $R_R$ of the reverse region is derived by using $T_R$ from the following equation (2):
[Mathematical formula 4]

$$R_R = \sqrt{\left(\frac{F^2 - E^2 - T_R^2}{2 \cdot T_R}\right)^2 + F^2} \qquad \cdots (2)$$

(in equation (2), E represents $W_B/2$ and F represents $W_B/2 + W_R$).

**10.** An orthokeratology contact lens according to claim 9 wherein the lens depth $T_R$ and the radius of curvature $R_R$ are respectively within $\pm 10\%$ of the derived lens depth $T_R$ and radius of curvature $R_R$.

Figure 1

Figure 2

## Figure 3

# Figure 4

# Figure 5

# Figure 6

## Figure 7

**INTERNATIONAL SEARCH REPORT**

International application No.

PCT/JP2017/031616

A.  CLASSIFICATION OF SUBJECT MATTER
*G02C7/04*(2006.01)i, *A61F9/013*(2006.01)i

According to International Patent Classification (IPC) or to both national classification and IPC

B.  FIELDS SEARCHED

Minimum documentation searched (classification system followed by classification symbols)
G02C7/04, A61F9/013

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2008-112121 A  (Eyemed Co., Ltd.),<br>15 May 2008 (15.05.2008),<br>entire text; all drawings<br>(Family: none) | 1-10 |
| A | US 2012/0057121 A1  (DEWOOLFSON, Bruce H.),<br>08 March 2012 (08.03.2012),<br>entire text; all drawings<br>& WO 2010/099102 A1 | 1-10 |

☐  Further documents are listed in the continuation of Box C.      ☐  See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 September 2017 (27.09.17) | Date of mailing of the international search report<br>10 October 2017 (10.10.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3881221 B